# EUROPÄISCHE PATENTSCHRIFT

(11) **EP 0 406 741 B1**
(45) Veröffentlichungstag und Bekanntmachung des Hinweises auf die Patenterteilung: **15.11.1995**
(21) Anmeldenummer: 90112538.5
(22) Anmeldetag: 30.06.1990
(51) Int. Cl.: H04L 1/16, H04L 1/12

(54) **Verfahren zur quasisynchronen Entscheidung zum Kanalwechsel**
Quasi-synchronous decision method for channel changing
Méthode de décision quasi-synchrone pour changement de canal

(30) Priorität: 04.07.1989 DE 3921909
(43) Veröffentlichungstag der Anmeldung: 09.01.1991
(73) Patentinhaber: Daimler-Benz Aerospace Aktiengesellschaft, 81663 München (DE)
(72) Erfinder: Denk, Hans, Dr. rer. nat., D-7900 Ulm-Jungingen (DE); Theisges, Walter, Dipl.-Phys., D-7901 Westerstetten (DE)
(74) Vertreter: Schulze, Harald Rudolf, Dipl.-Ing.

(56) Entgegenhaltungen:
- WO-A-88/04496
- IEEE TRANSACTIONS ON VEHICULAR TECHNOLOGIY Bd. VT-33, Nr. 3, August 1984, NEW- YORK,US; Seiten 88 - 97; COMROE ET AL: 'ARQ SCHEMES FOR DATA TRANSMISSION IN MOBILE RADIO SYSTEMS'

## Beschreibung

Die Erfindung betrifft ein Verfahren zur quasisynchronen Entscheidung zum Kanalwechsel nach dem Oberbegriff des Patentanspruchs 1. Ein solches Verfahren ist bereits aus der WO-A-8 804 496 bekannt.

Bei der Datenübertragung über Funkkanäle beispielsweise nach diesem bekannten Verfahren können vor allem im Kurzwellenbereich, Störungen auftreten, welche den Empfang oder die korrekte Auswertung übertragener Daten beeinträchtigen oder vollständig verhindern. Es ist daher bei diesen Verfahren vorgesehen, für die Datenübertragung ein Kommunikationsprotokoll nach dem sogenannten ARQ (Automatic Repeat Request)-Verfahren zugrunde zu legen. Dabei sendet der Absender Datenblöcke und der Adressat bestätigt gegebenenfalls empfangene und korrekte (interpretierbare) Daten durch das Übermitteln eines Quittungstelegramms an den Absender. In dem Quittungstelegramm (auch Blockquittung oder Quittung) teilt der Adressat dem Absender mit, welche Rahmen im zuletzt empfangenen Block in korrekter bzw. welche Daten in nicht korrekter Qualität empfangen werden und fordert den Absender damit auf, die bisher nicht korrekt empfangenen Daten zu wiederholen. Ein Block ist üblicherweise in einen Vorspann und eine Mehrzahl von Datenrahmen gegliedert und die Daten werden rahmenweise ausgewertet und quittiert bzw. nachgefordert. Wenn die übertragenen Daten neben eigentlicher Nachricht auch noch Redundanzinformation enthalten, können Übertragungsfehler erkannt und eventuell korrigiert werden. Ein Datenrahmen gilt als korrekt empfangen, wenn sein Nachrichteninhalt unter Einbeziehung der Redundanzinformation fehlerfrei interpretierbar ist. Entscheider hierfür sind bekannt.

Die Störungen auf einem benutzten Kanal können aber die Datenübertragung so stark beeinträchtigen, daß bei länger anhaltender Störung ein Wechsel des Funkkanals sinnvoll sein kann, um die aktuelle Datenübertragung vollständig und in vertretbarer Zeit abzuschließen. Ein solcher Kanalwechsel muß bei Absender und Adressat möglichst synchron erfolgen. Eine einfache Lösung ist die in der WO-A-8 804 496 vorgesehene Übertragung eines Kanalwechseltelegramms, mit welchem einer der Teilnehmer, welcher aus eigener Sicht einen Wechsel des Funkkanals für erforderlich hält, den Partner zum Kanalwechsel auf einen im Telegramm genannten oder zuvor vereinbarten anderen Funkkanal auffordert. Da von den Störungen des Kanals natürlich auch solche Kanalwechseltelegramme betroffen sind, kann eine so übermittelte Kanalwechselaufforderung u.U. gleichfalls in nicht korrekter Qualität übertragen und somit auf diese Weise kein gemeinsamer Kanalwechsel ausgelöst werden.

Aufgabe der vorliegenden Erfindung ist daher, ein Verfahren der im Oberbegriff des Patentanspruchs 1 genannten Art anzugeben, welches eine quasisynchrone Entscheidung zum Kanalwechsel bei Absender und Adressat gewährleistet.

Die Erfindung ist im Patentanspruch 1 beschrieben. Die Unteransprüche enthalten vorteilhafte Ausgestaltungen und Weiterbildungen der Erfindung.

Bei dem erfindungsgemäßen Verfahren aktualisieren und bewerten Absender und Adressat unabhängig voneinander aber nach äquivalenten Kriterien die Übertragungsqualität des Kanals und kommen über eine Bewertungsfunktion quasisynchron zu einer Entscheidung für einen Kanalwechsel. Das Verfahren ist unabhängig von der Charakteristik (wie z.B. Grad und Zeitverhalten) einer Störung auf einem aktuellen Übertragungskanal und ist insbesondere auch nicht auf die Übertragung spezieller Kanalwechseltelegramme angewiesen.

Die Aufwandssummen sind ein Maß für die kumulierte Anzahl der wiederholten bzw. zu wiederholenden Rahmen und somit für den Aufwand, der bis zum aktuellen Bewertungszeitpunkt nötig war, die durch die Korrektsummen gegebene Anzahl von Rahmen erstmalig korrekt zu übertragen.

Die Erfindung ist nachfolgend anhand von Beispielen noch eingehend erläutert. Dabei wird davon ausgegangen, daß der Aufbau einer Verbindung auf einem Kanal abgeschlossen ist und die Datenübertragung nach dem bereits genannten ARQ-Verfahren abgewickelt wird.

Zur Übertragung einer vollständigen Nachricht sendet der Absender Datenblöcke, die jeweils aus einem Vorspann und einer Anzahl von Rahmen bestehen. Die Anzahl der Rahmen innerhalb eines Blocks ist für alle Blöcke gleich wie oder kleiner als ein Maximalwert M. Ein Rahmen bestehe aus einer Mehrzahl von Zeichen der zu übertragenden Nachricht und aus Redundanz für die Zeichen dieses Rahmens. Der Empfänger kann durch Mitauswertung der Redundanz mit sehr hoher Wahrscheinlichkeit Übertragungsfehler erkennen, eine Entscheidung über die Möglichkeit der Korrektur erkannter Fehler treffen und ggf. die Fehler korrigieren. Ein Rahmen, dessen Nachrichteninhalt fehlerfrei empfangen oder zumindest vollständig korrigierbar ist, gilt als korrekt empfangen. Der Vorspann eines Blocks enthält beispielsweise unter anderem eine Blocknummer, die Anzahl der Rahmen des Blocks und Kennungen der Rahmen des Blocks, die bereits im vorhergehenden Block enthalten waren, aber wegen fehlerhaften Empfangs entsprechend dem zuletzt übermittelten Quittungstelegramm wiederholt werden.

Nach Empfang eines Blocks übermittelt der Adressat ein Quittungstelegramm, auch als Blockquittung bezeichnet, in welchem er mitteilt, welche Rahmen des zuletzt empfangenen Blocks bisher fehlerhaft bzw. welche korrekt empfangen werden. Der Absender interpretiert die Blockquittung als Bestätigung korrekt empfangener Rahmen, die demzufolge nicht mehr übertragen werden müssen, und als Aufforderung zur Wiederholung der fehlerhaft empfangenen Rahmen im nächsten Datenblock.

Empfängt der Absender eine Blockquittung auf den zuletzt gesendeten Block, so sendet er einen neuen Block. Der neue Block enthält dann die durch die Blockquittung nachgeforderten Rahmen und falls noch Platz frei ist auch neue Rahmen. Ein neuer Block ist dadurch gekennzeichnet, daß die Blocknummer gegenüber dem zuletzt gesendeten Block um eins erhöht ist.

Falls der Absender innerhalb einer gewissen Zeit nicht die Blockquittung für den zuletzt gesendeten Block empfängt, wiederholt er den zuletzt gesendeten Block und kennzeichnet diesen als Blockwiederholung, indem er die Blocknummer des Blockes beibehält.

Grundsätzlich kann die Übertragung so gestört sein, daß jeder beliebige Block bzw. jede beliebige Blockquittung teilweise oder vollständig zerstört ist und beim Empfänger nur unvollständig oder gar nicht interpretiert werden kann. Häufen sich derartige Störungen oder ist auf dem aktuellen Übertragungskanal keine Übertragung mehr möglich, so ist ein Wechsel auf einen anderen Übertragungskanal sinnvoll. Ein solcher Kanalwechsel muß bei Absender und Adressat möglichst gleichzeitig erfolgen.

Hierzu werden auf Absenderseite und auf Empfängerseite jeweils eine Korrektsumme KS bzw. KE und eine Aufwandssumme AS bzw. AE gebildet. Die Bildung der Summen erfolgt unter Auswertung der in den Blöcken bzw. Blockquittungen übertragenen Informationen sowie gegebenenfalls unter Berücksichtigung der Vorgänge, bei denen ein erwarteter Block bzw. eine erwartete Blockquittung nicht empfangen werden konnte. Die Korrektsummen und Aufwandssummen werden zu Beginn einer Übertragung und nach jedem Wechsel des Übertragungskanals so normiert, daß Absender und Adressat diesselben Startwerte haben. Die Korrektsumme KE des Adressaten gibt an, wieviele Datenrahmen erstmals beim Adressaten korrekt empfangen werden, während die Korrektsumme KS des Absenders die Zahl der Rahmen angibt, deren korrekter Empfang sich aus Quittungstelegrammen für den Absender ergibt. Eine Differenz zwischen den beiden Korrektsummen KE und KS kann sich dann ergeben, wenn der Adressat einige oder alle Rahmen eines Blocks korrekt empfängt und ein entsprechendes Quittungstelegramm an den Absender übermittelt, dieses beim Absender aber nicht oder nicht in korrekter Qualität eintrifft. In diesem Fall wird lediglich die Korrektsumme KE des Adressaten entsprechend der Anzahl der in dem Block korrekt empfangenen Rahmen erhöht, nicht hingegen die Korrektsumme KS des Absenders. Bei Ausbleiben eines Quittungstelegramms oder Empfang eines nicht korrekten Quittungstelegramms beim Absender wiederholt dieser den vorhergehenden Block unter der gleichen Blocknummer. Beim Adressaten wird diese Wiederholung als solche erkannt und als Anzeichen, daß das letzte Quittungstelegramm nicht oder nicht korrekt zum Absender gelangt ist, gewertet. Ein in dem wiederholten Block korrekt empfangener Rahmen führt nur dann zu einer Erhöhung der Korrektsumme KE des Adressaten, wenn dieser Rahmen im vorhergehenden Block nicht korrekt empfangen wurde. Auf diese Weise kann die Differenz zwischen den Korrektsummen KE und KS auf Adressaten- bzw. Absenderseite maximal gleich der maximalen Anzahl M von Rahmen innerhalb eines Blocks werden.

Die Aufwandssummen AS bzw. AE sind ein Maß für die kumulierte Anzahl der wiederholten bzw. zu wiederholenden Rahmen und somit für den Aufwand, der bis zum aktuellen Bewertungszeitpunkt nötig war, die durch die Korrektsummen gegebene Anzahl von Rahmen erstmalig korrekt zu übertragen.

Der Absender berechnet die Aufwandssumme AS aus den empfangenen Blockquittungen und aus Vorgängen, die zu einer Blockwiederholung führen. Empfängt der Absender eine erwartete Blockquittung, so erhöht er AS um die Anzahl der in der Blockquittung nachgeforderten Rahmen. Kann der Absender eine erwartete Blockquittung nicht oder nicht vollständig empfangen, so erhöht er AS um die maximale Anzahl M der Rahmen eines Blockes.

Der Adressat berechnet seine Aufwandssumme AE aus den durch Blockquittungen nachgeforderten Rahmen, aus Vorgängen bei denen Blöcke mehrfach empfangen werden und aus Vorgängen, bei denen ein erwarteter Block nicht empfangen werden konnte. Empfängt der Adressat einen neuen Block (d.h. es wurde noch kein Block mit dieser Blocknummer empfangen) oder empfängt er nach einem Kanalwechsel zum ersten Mal einen Block, so erhöht er AE um die Anzahl der Rahmen, die aus diesem Block nachzufordern sind. Kann der Adressat einen erwarteten Block nicht empfangen, so erhöht er AE um die maximale Anzahl M der Rahmen eines Blockes. Empfängt der Adressat einen Block zum wiederholten Mal (d.h. die Blocknummer des aktuell empfangenen Blockes hat sich gegenüber dem davor empfangenen Block nicht geändert) und ist dieser Block nicht der erste empfangene Block nach einem Kanalwechsel, so erhöht er AE um die maximale Anzahl M der Rahmen eines Blockes und um die Anzahl der nachzufordernden Rahmen dieses Blockes vermindert um die Anzahl der Rahmen, die beim vorausgehenden Empfang des Blockes nachgefordert wurden.

Zur Bildung der Korrektsummen und Aufwandssummen sind beispielsweise digitale Zähler, Akkumulatoren und dergleichen geeignet.

Für die Bewertung der Qualität des aktuellen Übertragungskanals verwenden der Absender und der Adressat diesselbe Bewertungsfunktion. Die Bewertungsfunktion ist dadurch definiert, daß sie für jede zulässige Anzahl von Datenrahmen festgelegt, wieviel Aufwand für die korrekte Übertragung dieser Rahmen auf dem aktuellen Übertragungskanal erlaubt ist, ohne das ein Wechsel des Übertragungskanals erforderlich ist. Die Bewertungsfunktion liegt als Zuordnung eines Schwellwerts T für die aktuelle Aufwandssumme AE bzw. AS zur aktuellen Korrektsumme KE bzw. KS vor.

Überschreitet der aktuelle Wert von AE bzw. AS den zum aktuellen Wert von KE bzw. KS gehörenden Schwellwert, der durch die Bewertungsfunktion festgelegt ist, so gilt ein Kanalwechsel als vereinbart.

Die Bewertungsfunktion wird vom Absender und vom Adressaten jeweils angewendet, wenn nach dem oben beschriebenen Übertragungsprotokoll die Übertragung eines Blockes und der dazugehörenden Blockquittung als abgeschlossen betrachtet werden kann (dies beinhaltet auch alle denkbaren Störfälle) und die Parameter für die Kanalqualität aktualisiert sind.

Als Beispiel für eine Bewertungsfunktion kann eine Gerade angeführt werden, die einen positiven Ordinatenabschnitt besitzt und deren Steigung größer als eins ist. Besitzt der Ordinatenabschnitt einen Wert, der größer oder gleich der maximalen Anzahl von Rahmen eines Blockes ist, so wird verhindert, daß bei schweren Übertragungsfehlern unmittelbar nach der Übertragung des ersten Blockes ein Kanalwechsel eingeleitet wird. Die posititve Steigung bewirkt, daß nach vielen fehlerfrei übertragenen Blocken ein Kanalwechsel erst dann erfolgt, wenn über einen längeren zeitlichen Abschnitt die Übertragung sehr stark gestört ist. Die Wahl der Geradenparameter in diesem Beispiel ist für sogenannte Bursts, die bei ionosphärischen Störungen sehr häufig auftreten, besonders geeignet.

Andere Bewertungsfunktionen sind gleichfalls verwendbar, insbesondere kann für längere Übertragungszeiten eine monoton steigende Bewertungsfunktion vorteilhaft sein, deren Steigung mit wachsender Anzahl von Rahmen abnimmt.

Das beschriebene Verfahren gewährleistet durch eine zwischen Absender und Adressaten abgestimmte Zählweise, daß die aktuellen Zählerstände der Kanalqualitätsparameter bei Absender und Adressat höchstens um die maximale Anzahl der Rahmen eines Blockes differieren. Da der Absender und der Adressat dasselbe Entscheidungskriterium verwenden, hat dies zur Folge, daß beide fast gleichzeitig d.h. quasisynchron zur Entscheidung für einen Kanalwechsel gelangen.

Insbesondere ist mit dem beschriebenen Verfahren ein Wechsel des aktuellen Übertragungskanals auch dann möglich, wenn der Empfang bei Absender oder Adressat oder bei beiden total gestört ist.

Eine Ergänzung des beschriebenen Verfahrens durch Kombination mit der Übertragung von Kanalwechselaufforderungstelegrammen ist möglich.

## Patentansprüche

1. Verfahren zur quasisynchronen Entscheidung zum Kanalwechsel bei der gestörten Funkkommunikation zwischen einem Absender und einem Adressaten, wobei
der Absender Datentelegramme in Form von Datenblöcken,die mehrere Datenrahmen umfassen, an den Adressaten und der Adressat nach jedem Datenblock ein Quittungstelegramm an den Absender übermittelt,
zumindest bei dem Adressaten Einrichtungen zur Fehlererkennung in den empfangenen Telegrammen und zur Einstufung einzelner Datenrahmen als korrekt oder als fehlerhaft empfangen vorhanden sind,
die Quittungstelegramme eine Information über die beim Adressaten im vorhergegangenen Datenblock korrekt empfangenen bzw. die fehlerhaft empfangenen Datenrahmen enthalten, und
der Absender Datenrahmen, deren korrekter Empfang vom Adressaten nicht quittiert wird, im nächsten Datenblock wiederholt,
dadurch gekennzeichnet,
daß auf Adressatenseite und auf Absenderseite eine Korrektsumme (KE bzw. KS) aus den beidseitig als korrekt übertragen bewerteten Datenrahmen und eine Aufwandsumme (AE bzw. AS) als Maß des für die Übertragung insgesamt erforderlichen Aufwands an Datenrahmen gebildet werden, wobei
- die Korrektsumme (KE) des Adressaten die Zahl der erstmals beim Adressaten korrekt empfangenen Rahmen angibt,
- die Korrektsumme (KS) des Absenders die Zahl der Rahmen angibt, deren korrekter Empfang sich aus Quittungstelegrammen für den Absender ergibt,
- die Aufwandssumme (AE) des Adressaten ein Maß für die kumulierte Anzahl der wiederholten Rahmen ist, die nötig war, um die durch die Korrektsumme (KE) des Adressaten gegebene Anzahl von Rahmen erstmalig korrekt zu übertragen,
- die Aufwandssumme (AS) des Absenders ein Maß für die kumulierte Anzahl der zu wiederholenden Rahmen ist, die nötig war, um die durch die Korrektsumme (KS) des Absenders gegebene Anzahl von Rahmen erstmalig korrekt zu übertragen,
- die beiden Korrektsummen (KE, KS), bzw. die beiden Aufwandssummen (AE, AS) jeweils nahezu übereinstimmen,
daß auf Adressatenseite und auf Absenderseite übereinstimmend eine Bewertungsfunktion vorgegeben ist, welche zu jedem Korrektsummenwert (KE bzw. KS) einen Schwellwert (T) für den Aufwandsummenwert (AE bzw. AS) festlegt,
daß eine Bewertung der Übertragungsqualität des benutzten Kanals durch Vergleich des aktuellen Aufwandsummenwerts mit dem durch den aktuellen Korrektsummenwert festgelegten Schwellwert erfolgt, und
daß bei festgestellter Schwellwertüberschreitung ein Kanalwechsel vorgenommen wird.

2. Verfahren nach Anspruch 1, dadurch gekennzeichnet, daß die Bewertung der Übertragungsqualität jeweils nach Übermittlung eines Quittungstelegramms und daraus vorgenommener Aktualisierung der Korrektsummen und der Aufwandsummen durchgeführt wird.

3. Verfahren nach Anspruch 1 oder 2, dadurch gekennzeichnet, daß beim Absender für jeden Rahmen, dessen korrekter Empfang durch ein korrektes Quittungstelegramm bestätigt ist, die Korrektsumme (KS), beim Adressaten für jeden erstmals korrekt empfangenen Rahmen die Korrektsumme (KE) um Eins erhöht wird und daß bei Absender und Adressat die Aufwandssummen (AS bzw. AE) um die Anzahl der nachgeforderten Rahmen erhöht werden.

4. Verfahren nach einem der Ansprüche 1 bis 3, dadurch gekennzeichnet, daß die Anzahl der Rahmen innerhalb eines Blocks einen Maximalwert (M) nicht überschreitet und daß bei Ausfall oder nicht korrektem Empfang eines Quittungstelegramms beim Absender die Aufwandsumme (AS) um den genannten Maximalwert (M) erhöht und der gesamte zuletzt ausgesandte Block wiederholt übertragen wird, und daß beim Adressaten bei Ausfall oder bei nicht korrektem Empfang eines ganzen Blocks oder bei wiederholtem Empfang eines Blocks die Aufwandsumme (AE) um den Maximalwert (M) erhöht wird.

5. Verfahren nach einem der Ansprüche 1 bis 4, dadurch gekennzeichnet, daß die Bewertungsfunktion eine Zuordnung von Schwellwert (T) zu Korrektsumme festlegt, gemäß der der Schwellwert ausgehend von einem Startwert linear mit der Korrektsumme steigt.

6. Verfahren nach einem der Ansprüche 1 bis 5, dadurch gekennzeichnet, daß zusätzlich die Übertragung von Kanalwechseltelegrammen vorgesehen ist.

7. Verfahren nach einem der Ansprüche 1 bis 6, dadurch gekennzeichnet, daß zu Beginn einer Datenübertragung und nach einem Kanalwechsel bei Absender und Adressat die aktuellen Werte für Korrektsummen und Aufwandsummen auf gleiche Ausgangswerte gesetzt werden.

8. Verfahren nach einem der Ansprüche 1 bis 7, dadurch gekennzeichnet, daß der Adressat beim ersten Empfang eines Blocks nach einem Kanalwechsel die Aufwandssumme (AE) um die Anzahl der Rahmen, die aus diesem Block nachzufordern sind, erhöht.

9. Verfahren nach einem der Ansprüche 1 bis 8, dadurch gekennzeichnet, daß bei Empfang eines Blocks zum wiederholten Mal und sofern dieser Block nicht der erste empfangene Block nach einem Kanalwechsel, ist der Adressat die Aufwandssumme (AE) erhöht um die maximale Anzahl der Rahmen eines Blockes und um die Anzahl der nachzufordernden Rahmen dieses Blockes, vermindert um die Anzahl der Rahmen, die beim vorausgehenden Empfang dieses Blockes nachgefordert wurden.

10. Verfahren nach einem der Ansprüche 1 bis 9, dadurch gekennzeichnet, daß die Datenblöcke mit einer fortschreitenden Blocknumerierung übertragen werden, bei Ausfall eines Quittungstelegramms aber der zuletzt übertragene Block mit derselben Blocknummer wiederholt wird.

11. Verfahren nach einem der Ansprüche 1 bis 10, dadurch gekennzeichnet, daß Korrektsummen und Aufwandsummen kumulativ über die gesamte Verweildauer auf einem Kanal gebildet werden.

12. Verfahren nach einem der Ansprüche 1 bis 10, dadurch gekennzeichnet, daß Korrektsummen und Aufwandssummen über ein gleitendes Zeitfenster gebildet werden.

## Claims

1. Method for quasi-synchronous decision-making for change of channel in the case of disturbed radio communication between a consignor and an addressee, wherein the consignor transmits data telegrams in the form of data blocks, which comprise several data frames, to the addressee and after each data block the addressee transmits an acknowledgement telegram to the consignor, devices for error recognition in the received telegrams and for classifying individual data frames as correctly or defectively received are present at least at the addressee, the acknowledgement telegrams contain an information about the data frames correctly received or deflectively received in the preceding data blocks at the addressee, and the consignor repeats, in the next data block, data frames of which correct reception is not acknowledged by the addressee, characterised thereby that at the addressee end and at the consignor end a correct sum (KE or KS) is formed from the data frames rated at both ends as correctly transmitted and a cost sum (AE or AS) is formed as a measure of the expenditure of data frames required in total for the transmission, wherein
- the correct sum (KE) of the addressee indicates the number of frames correctly received the first time at the addressee,
- the correct sum (KS) of the consignor indicates the number of frames, the correct reception of which results from ackowledgement telegrams for the consignor,
- the cost sum (AE) of the addressee is a measure for the accumulated number of repeated frames which was needed in order to correctly transmit the first time the number of frames indicated by the correct sum (KE) of the addressee,
- the cost sum (AS) of the consignor is a measure for the accumulated number of the repeated frames which was necessary in order to correctly transmit the first time the number of frames indicated by the correct sum (KS) of the consignor,
- the two correct sums (KE, KS) or the two cost sums (AE, AS) each time almost agree,
that at the addressee end and at the consignor end in correspondence a weighting function is preset, which establishes for each correct sum value (KE or KS) a threshold value (T) for the cost sum value (AS or AS),
that an evaluation of the transmission quality of the channel used is carried out by comparison of the actual cost sum value with the threshold value established by the actual correct sum value, and
that a change of channel is undertaken in the case of exceeding of threshold value.

2. Method according to claim 1, characterised thereby that the evaluation of the transmission quality is performed each time after communication of an acknowledgement telegram and actualisation, which is undertaken therefrom, of the correct sums and the cost sums.

3. Method according to claim 1 or 2, characterised thereby that at the consignor the correct sum (KS) is increased by one for each frame of which the correct reception thereof is confirmed by a correct acknowledgement telegram and at the addressee the correct sum (KE) is increased by one for each frame correctly received the first time, and that at the consignor and addressee cost sums (AS or AE) are increased by the number of extra frames.

4. Method according to one of claims 1 to 3, characterised thereby that the number of frames within a block does not exceed a maximum value (M) and that in the case of loss or incorrect reception of an acknowledgement telegram at the consignor the cost sum (AS) is increased by the said maximum value (M) and the entire finally dispatched block is transmitted over again, and that in the case of loss or incorrect reception of a whole block or in the case of repeated reception of a block the cost sum (AE) is increased at the addressee by the maximum value (M).

5. Method according to one of claims 1 to 4, characterised thereby that the weighting function establishes an association of threshold value (T) to correct sum, according to which the threshold value rises linearly from a starting value by the correct sum.

6. Method according to one of claims 1 to 5, characterised thereby that in addition the transmission of channel change telegrams is provided.

7. Method according to one of claims 1 to 6, characterised thereby that at the beginning of a data transmission and after a change of channel the actual values for correct sums and cost sums are set at the consignor and addressee to like starting values.

8. Method according to one of claims 1 to 7, characterised thereby that on first reception of a block after a channel change the addressee increases the cost sum (AE) by the number of frames which are extra from this block.

9. Method according to one of claims 1 to 8, characterised thereby that on reception of a block for the repeated time and insofar as this block is not the first block received after a channel change the addressee increases the cost sum (AE) by the maximum number of the frames of a block and by the number of extra frames of this block, reduced by the number of frames which were extra in the preceding reception of this block.

10. Method according to one of claims 1 to 9, characterised thereby that the data blocks are transmitted with a progressing block numbering, but in the case of loss of an acknowledgement telegram the finally transmitted block is repeated with the same block number.

11. Method according to one of claims 1 to 10, characterised thereby that the correct sums and cost sums are formed cumulatively over the entire period of duration on a channel.

12. Method according to one of claims 1 to 11, characterised thereby that the correct sums and cost sums are formed over a sliding time window.

## Revendications

1. Procédé pour la décision quasi synchrone de changement de canal, lors de communication radio perturbée entre un expéditeur et un destinataire,
l'expéditeur retransmettant des télégrammes de données en forme de blocs de données, qui comprennent plusieurs cadres de données, au destinataire et le destinataire retransmettant, selon chaque bloc de données, un télégramme d'acquittement à l'expéditeur,
au moins chez le destinataire, des agencements pour la reconnaissance de défaut dans les télégrammes reçus et pour la qualification de cadres de données individuels, comme reçus corrects ou comme reçus défectueux, étant présents,
les télégrammes d'acquittement contenant une information sur les cadres de données reçus, corrects ou bien reçus défectueux dans le bloc de données précédent, chez le destinataire, et
l'expéditeur réitérant, dans le bloc de données suivant, des cadres de données, dont la réception correcte n'est pas acquittée par le destinataire,
caractérisé en ce
que du côté du destinataire et du côté de l'expéditeur, une somme de "correct" (KE ou bien KS), de cadres de données évalués comme transmis corrects des deux côtés, et une somme de dépense (AE ou bien AS), comme mesure de la dépense totale requise pour la transmission, sont formées aux cadres de données,
- la somme de "correct" (KE) du destinataire indiquant le nombre des cadres reçus corrects la première fois chez le destinataire,
- la somme de "correct" (KS) de l'expéditeur indiquant le nombre des cadres, dont la réception correcte résulte de télégrammes d'acquittement pour l'expéditeur,
- la somme de dépense (AE) du destinataire étant une mesure pour le nombre cumulé des cadres réitérés, qui étaient nécessaires, afin de transmettre correct la première fois le nombre de cadres donné par la somme de "correct" (KE) du destinataire,
- la somme de dépense (AS) de l'expéditeur étant une mesure pour le nombre cumulé des cadres à répéter, qui était nécessaire, afin de transmettre correct la première fois le nombre de cadres donné par la somme de "correct" (KS) de l'expéditeur,
- les deux sommes de "correct" (KE, KS) ou bien les deux sommes de dépense (AE, AS), chaque fois, coïncidant à peu près,
que, du côté du destinataire et du côté de l'expéditeur, est préallouée une fonction d'estimation coïncidant, laquelle détermine, à chaque valeur de somme de "correct" (KE ou bien KS), une valeur de seuil (T) pour la somme de dépense (AE ou bien AS),
qu'une estimation de la qualité de transmission du canal utilisé a lieu par comparaison de la valeur de somme de dépense actuelle avec la valeur de seuil déterminée par la valeur de somme de "correct" actuelle, et
que, lors de franchissement de valeur de seuil déterminée, un changement de canal est entrepris.

2. Procédé selon la revendication 1, caractérisé en ce que l'estimation de la qualité de transmission, chaque fois, est exécutée après retransmission d'un télégramme d'acquittement et actualisation, entreprise à partir de cela, des sommes de "correct" et des sommes de dépense.

3. Procédé selon la revendication 1 ou la revendication 2, caractérisé en ce que, chez l'expéditeur, pour chaque cadre, dont la réception correcte est confirmée par un télégramme d'acquittement correct, la somme de "correct" (KS) est augmentée de un, chez le destinataire, pour chaque cadre reçus correct la première fois, la somme de "correct" (KE) est augmentée de un, et que, chez l'expéditeur et le destinataire, les sommes de dépense (AS ou bien AE) sont augmentées du nombre des cadres demandés à nouveau.

4. Procédé selon une des revendications 1 à 3, caractérisé en ce que le nombre des cadres à l'intérieur d'un bloc ne franchit pas une valeur maximale (M), en ce que, lors de défaillance ou de réception non correcte, un télégramme d'acquittement chez l'expéditeur augmente la somme de dépense (AS) de la valeur maximale (M) nommée et le bloc émis en dernier, complet, est transmis réitéré, et en ce que, chez le destinataire, lors de défaillance ou lors de réception non correcte d'un bloc complet, ou lors de réception réitérée d'un bloc, la somme de dépense (AE) est augmentée de la valeur maximale (M).

5. Procédé selon une des revendications 1 à 4, caractérisé en ce que la fonction d'estimation détermine une coordination de la valeur de seuil (T) avec la somme de "correct", conformément à laquelle, la valeur de seuil, partant d'une valeur de démarrage, augmente linéairement avec la somme de "correct".

6. Procédé selon une des revendications 1 à 5, caractérisé en ce que, en supplément, la transmission de télégrammes de changement de canal est prévue.

7. Procédé selon une des revendications 1 à 6, caractérisé en ce qu'au commencement d'une transmission de données et après un changement de canal, chez l'expéditeur et le destinataire, les valeurs actuelles pour des sommes de "correct" et des sommes de dépense, sont établies sur des valeurs de départ identiques.

8. Procédé selon une des revendications 1 à 7, caractérisé en ce que le destinataire, lors de la première réception d'un bloc après un changement de canal, augmente la somme de dépense (AE) du nombre des cadres, qui sont demandés à nouveau à partir de ce bloc.

9. Procédé selon une des revendications 1 à 8, caractérisé en ce que, lors de réception d'un bloc pour la fois réitérée et pour autant que ce bloc n'est pas le premier bloc reçu après un changement de canal, le destinataire augmente la somme de dépense (AE) du nombre maximal des cadres d'un bloc et du nombre des cadres de ce bloc à demander à nouveau, et la diminue du nombre des cadres, qui, lors de la réception précédente de ce bloc, furent demandés à nouveau.

10. Procédé selon une des revendications 1 à 9, caractérisé en ce que les blocs de données sont transmis avec une numérotation de bloc progressant, mais en ce que, lors de défaillance d'un télégramme d'acquittement, le bloc transmis en dernier est réitéré avec le même numéro de bloc.

11. Procédé selon une des revendications 1 à 10, caractérisé en ce que les sommes de "correct" et les sommes de dépense sont formées de façon cumulative, durant la durée de séjour totale sur un canal.

12. Procédé selon une des revendications 1 à 10, caractérisé en ce que des sommes de "correct" et des sommes de dépense sont formées durant une fenêtre de temps glissante.
